# EUROPEAN PATENT SPECIFICATION

(11) **EP 1 151 436 B1**
(45) Date of publication and mention of the grant of the patent: **09.04.2003**
(21) Application number: 00900787.3
(22) Date of filing: 17.01.2000
(51) Int. Cl.: G11B 33/04

(54) **DISC STORAGE SYSTEM**
PLATTENAUFBEWAHRUNSSYSTEM
DISPOSITIF DE STOCKAGE DE DISQUES

(30) Priority: 25.01.1999 IE 990055
(43) Date of publication of application: 07.11.2001
(73) Proprietor: Allsop Europe Limited, Butlerstown, County Waterford (IE)
(72) Inventor: HOOD, Oliver, Hood Associates, Dublin 2 (IE)
(74) Representative: Coyle, Philip Aidan
(86) International application number: IE0000006
(87) International publication number: WO00044000

(56) References cited:
- EP-A- 0 415 696
- DE-U- 9 207 974
- DE-U- 9 301 392
- DE-U- 29 823 121
- US-A- 3 907 116

## Description

This invention relates to a storage system for disc-shaped data storage media, for example so-called mini-discs.

According to the present invention there is provided a disc case storage system for disc-shaped data storage media, the system comprising a housing having a pair of opposite sidewalls extending forwardly from the rear of the housing and defining between them a first disc case storage region, the interior surfaces of the sidewalls having support means for supporting a plurality of disc cases spaced one above the other and each extending across the first disc case storage region and being supported at its opposite edges, characterised in that the system further comprises means for securing the housing laterally next to and spaced from a like housing such that the adjacent sidewalls of the two housings define a further disc case storage region between the two housings, and in that the exterior surfaces of the sidewalls have support means for supporting, when the housing is secured to a like housing, a further plurality of disc cases spaced one above the other and each extending across the further disc case storage region.

International Application WO 96/13836, which corresponds to the pre-characterising part of claim 1, discloses a rack for storing a plurality of CDs in their cases. The rack includes an open-fronted housing having opposite sidewalls whose internal surfaces have horizontal guide rails for accommodating the CD cases one above the other across the width of the housing. However, the outside surfaces of the sidewalls are smooth, and therefore similar housings cannot be connected together in the manner of the invention to provide a further CD storage region between them.

Embodiments of the invention will now be described, by way of example, with reference to the accompanying drawings, in which:
Fig. 1 is a perspective view of a mini-disc storage system according to a first embodiment of the invention;
Fig. 2 is an enlarged view of part of a second embodiment of the invention;
Fig. 3 is an enlarged view of part of a third embodiment of the invention;
Figs. 3A and 3B are perspective views of the upper and lower bridging members, respectively, of the embodiment of Fig. 3;
Fig. 4 shows how an upper bridging member in the embodiment of Fig. 3 is slid into the top of the housing; and
Fig. 5 shows how the housing of the embodiments is made from two mirror-image halves joined together.

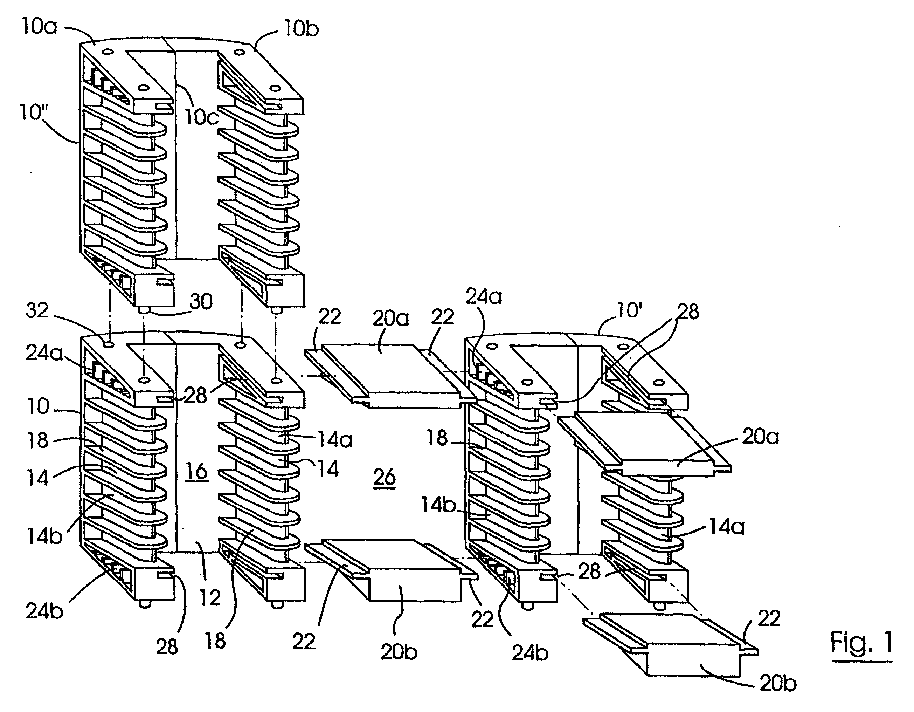

Referring to Fig. 1, the storage system includes an open-front housing 10 having a substantially vertical rear wall 12 and a pair of opposite substantially vertical sidewalls 14 connected together by the rear wall 12 and extending forwardly therefrom so that the housing 10 has, in plan view, an approximate U-shape. The sidewalls 14 define between them a region 16 for the storage of mini-discs, such region being accessible through the open front of the housing 10. The housing 10 is made from two hollow mirror-image halves 10a and 10b, each moulded from plastics material and secured together along a centre line 10c as will be described.

The interior surface 14a of each sidewall 14 has a plurality of disc support members in the form of fins or vanes 18 which extend laterally from the surface 14a and are spaced vertically one above the other. The vanes 18 are also inclined downwardly towards the rear of the housing 10.

In use, a plurality of mini-discs (not shown) each in its respective shallow rectangular case may be stored spaced one above the other in the disc storage region 16. Each mini-disc case extends transversely across the region 16 and is supported at its opposite edges by a respective pair of the vanes 18, one such vane 18 being on one of the surfaces 14a and the other vane 18 being on the opposite surface 14a. The inclination of the vanes 18 downwardly towards the rear causes the front edges of the cases, which usually show the title/artist or other content of the disc, to be angled upwardly be more easily seen.

The storage system also includes upper and lower bridging members 20a, 20b respectively which permit the housing 10 to be secured laterally next to and spaced from a like housing 10' which is in all respects substantially the same as the housing 10. Each bridging member 20a, 20b has a respective tongue 22 at each opposite end thereof, and each housing 10, 10' has a pair of slots 24a, 24b on the outside of each sidewall 14, an upper slot 24a at the top of the sidewall and a lower slot 24b at the bottom of the sidewall. As seen in Fig. 1, the housings 10, 10' are secured together by inserting the tongues 22 of the upper bridging member 20a into the upper slots 24a of the adjacent sidewalls 14 of the housings 10, 10', and by inserting the tongues 22 of the lower bridging member 20b into the lower slots 24b of the adjacent sidewalls 14 of the housings 10, 10'. The tongues 22 are an interference fit in their respective slots 24a or 24b.

When the housings 10 and 10' are secured together with the tongues 22 pushed fully home in their respective slots 24a or 24b, the adjacent sidewalls 14 of the two housings 10, 10' define between them a further region 26 for the storage of mini-discs.

Like the interior surfaces 14a, each exterior surface 14b of the housings 10 and 10' has a plurality of vanes 18 which extend laterally from the surface 14b, are spaced vertically one above the other, and are inclined downwardly towards the rear of the housings 10, 10' (actually, each vane 18 on an exterior surface 14b is a continuation, around the front of the sidewall, of a respective vane 18 on the interior surface).

In use, a further plurality of mini-discs (not shown) in their cases may stored spaced one above the other in the further disc storage region 26. Each mini-disc case extends transversely across the region 26 and is supported at its opposite edges by a respective pair of the vanes 18, one such vane 18 being on the exterior surface 14b of the housing 10 and the other vane 18 being on the exterior surface 14b of the housing 10'.

When not in use for linking two housings 10, 10' together, the bridging members 20a, 20b may be stored extending between the sidewalls 14 one at the top and one at the bottom of the housing, i.e. respectively above and below the disc storage region 16, as seen for the housing 10'. To this end, each housing 10, 10' has a pair of grooves 28 on the inside of each sidewall 14, one groove at the top and the other groove at the bottom of the sidewall, and the bridging members 20a, 20b are slid in with their tongues 22 slidingly engaging in the grooves 28.

The housing 10 is also adapted for stacking vertically upon a like housing, as seen for the housing 10" which is in all respects substantially the same as the housings 10 and 10'. To this end the base of the housing 10" has four feet 30 which are an interference fit in respective holes 32 in the top of the housing 10.

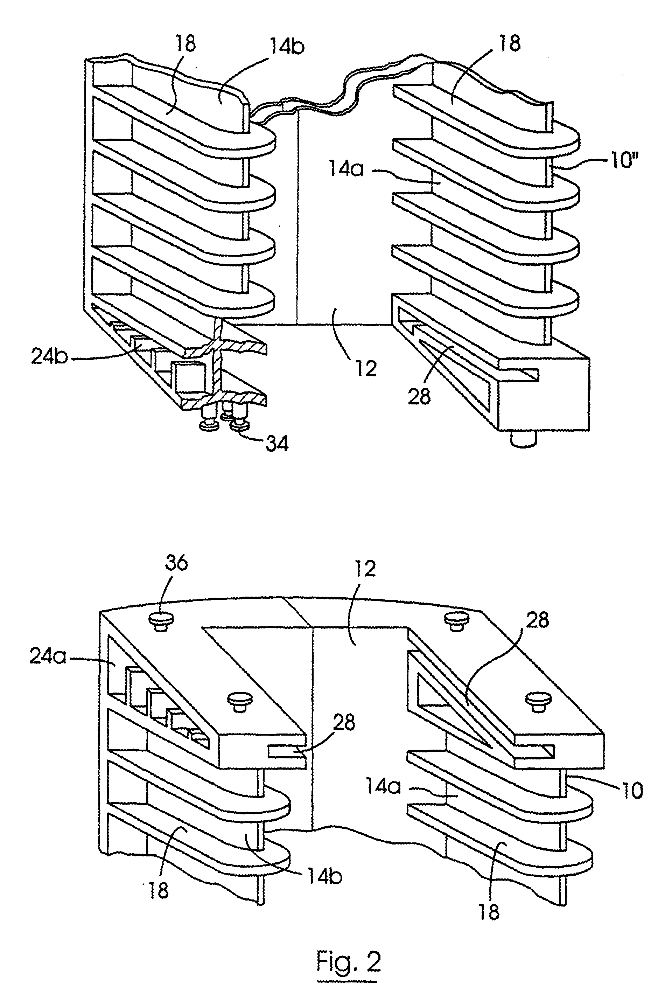

In a second embodiment, Fig. 2, vertical stacking is achieved by replacing each foot 30 by a cluster of grooved bosses 34 and by replacing each hole 32 by a mushroom headed boss 36. When the upper housing 10" is pushed downwardly onto the lower housing 10, the grooved bosses 34 resiliently splay apart to allow the mushroom head of the boss 36 to enter between them, and then they snap back into position around the mushroom head which engages in the grooves in the bosses. In all other respects the second embodiment is the same as the first embodiment.

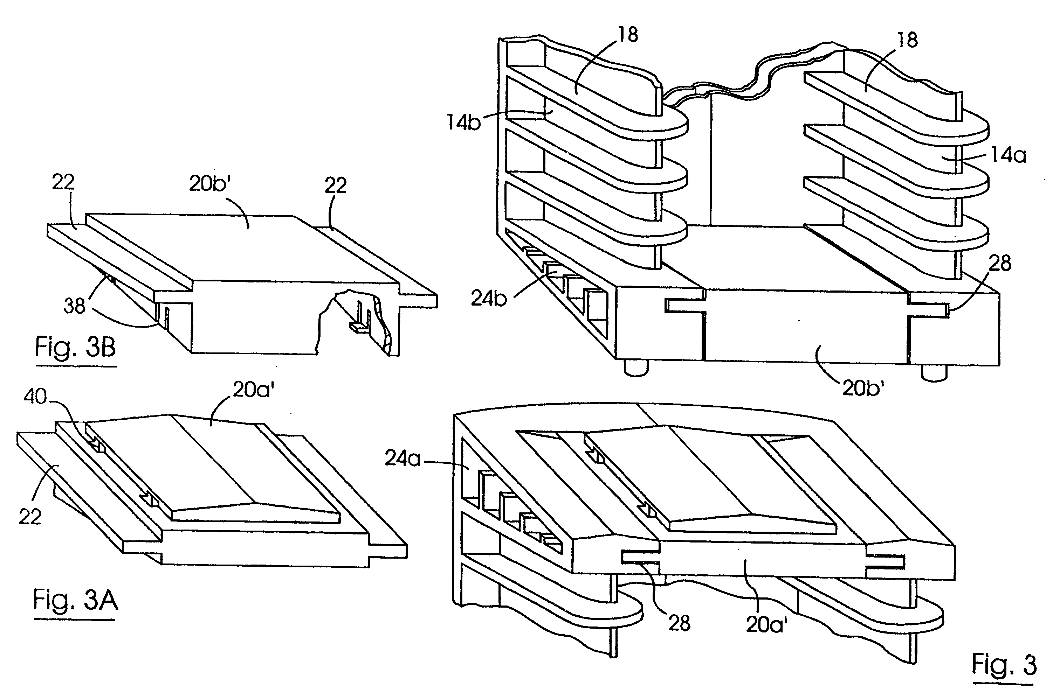

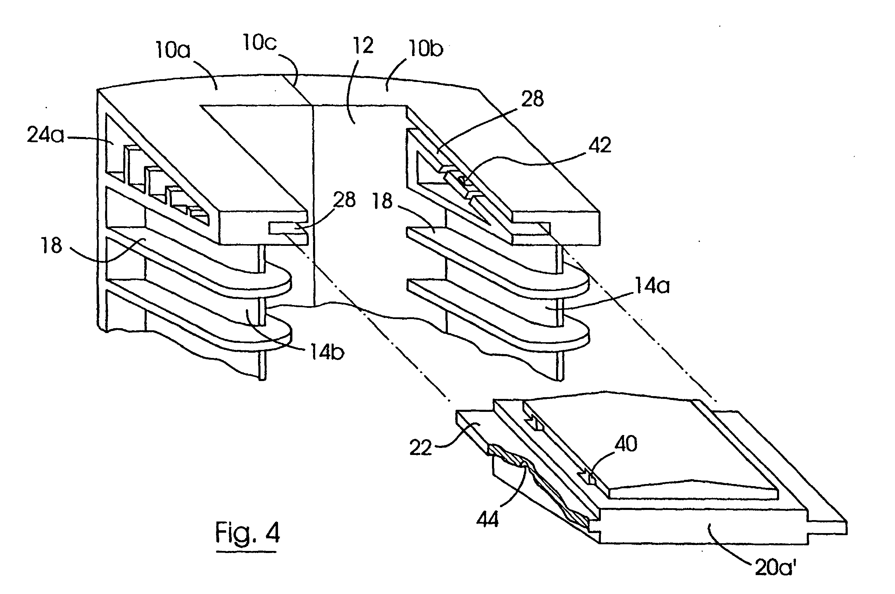

In a third embodiment, Figs. 3, 3A and 3B, vertical stacking is achieved using the bridging members 20a' and 20b', when the latter are stored extending between the sidewalls 14 at the top and bottom respectively of the housing 10. To this end the lower bridging member 20b' has clips 38 which can engage in corresponding recesses 40 in the upper bridging member 20a'. Fig. 4 shows how, in this third embodiment, the upper bridging member 20a' is retained in the grooves 28 by providing the wall of the latter with a deflectable dimple 42 which resiliently engages in a corresponding recess 44 on the underside of the tongue 22 when the member 20a' is fully engaged. A corresponding arrangment is also provided in respect of the lower bridging member 20b'. In all other respects the third embodiment is the same as the first embodiment.

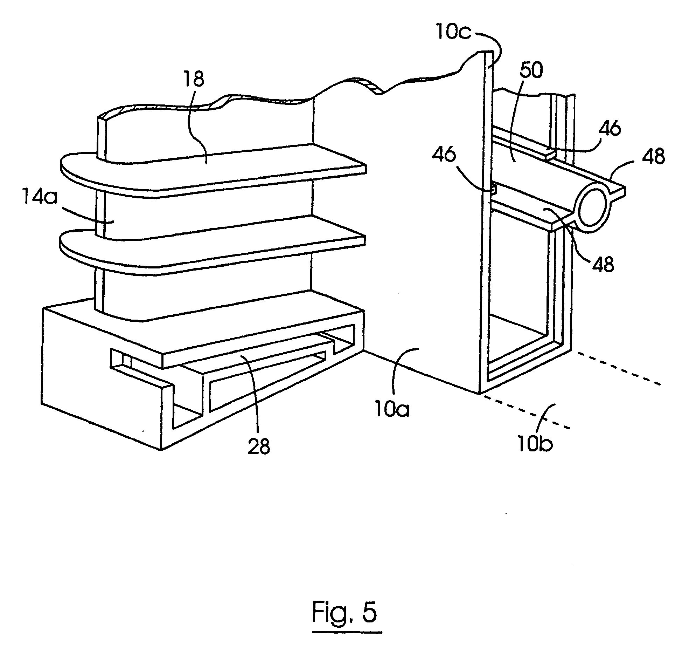

Figure 5 shows how the two hollow mirror-image halves 10a and 10b of the housing 10 are secured together. Internally the rear portion of each part 10a and 10b, constituting a respective half of the rear wall 12, has a pair of opposite horizontal grooves 46. These grooves 46 are slidably engaged by respective flanges 48 on each opposite side of a strut 50 extending horizontally along and within the rear wall 12, the flanges 48 extending across the join 10c between the two parts 10a, 10b to engage the grooves 46 on each side.

The invention is not limited to the embodiments described herein which may be modified or varied without departing from the scope of the invention.

## Claims

1. A disc case storage system for disc-shaped data storage media, the system comprising a housing (10) having a pair of opposite sidewalls (14) extending forwardly from the rear of the housing and defining between them a first disc case storage region (16), the interior surfaces (14a) of the sidewalls having support means (18) for supporting a plurality of disc cases spaced one above the other and each extending across the first disc case storage region (16) and being supported at its opposite edges, **characterised in that** the system further comprises means (20a, 20b) for securing the housing (10) laterally next to and spaced from a like housing (10') such that the adjacent sidewalls (14) of the two housings define a further disc case storage region (26) between the two housings, and **in that** the exterior surfaces (14b) of the sidewalls have support means (18) for supporting, when the housing is secured to a like housing, a further plurality of disc cases spaced one above the other and each extending across the further disc case storage region (26).

2. A storage system as claimed in claim 1, wherein the support means (18) on the interior (14a) and exterior (14b) surfaces of the sidewalls (14) comprise a plurality of vertically spaced support members extending laterally from the surface of the sidewall.

3. A storage system as claimed in claim 2, wherein the support members (18) are inclined downwardly towards the rear of the housing.

4. A storage system as claimed in any preceding claim, wherein the means for securing the housing laterally next to and spaced from a like housing comprises at least one bridging member (20a, 20b) having a means (22) at each opposite end thereof for engagement with a respective housing.

5. A storage system as claimed in claim 4, wherein each engagement means comprises means (22) for insertion into a corresponding aperture (24a, 24b) in the respective housing.

6. A storage system as claimed in any preceding claim, wherein the housing has a rear wall (12) connecting the sidewalls (14) so as to form, in plan view, an approximate U-shape.

## Patentansprüche

1. Plattenhüllen-Lagersystem für plattenförmige Datenspeichermedien, wobei das System ein Gehäuse (10) mit einem Paar gegenüberliegender Seitenwände (14) aufweist, die sich nach vorne von der Rückseite des Gehäuses erstrecken und zwischen sich einen ersten Plattenhüllen-Lagerbereich (16) begrenzen, wobei die Innenflächen (14a) der Seitenwände Haltemittel (18) zum Halten einer Mehrzahl von Plattenhüllen aufweisen, die übereinander verteilt sind und sich jeweils über den ersten Plattenhüllen-Lagerbereich (16) erstrecken und an seinen Seitenkanten gehalten werden, **dadurch gekennzeichnet, dass** das System ferner Mittel (20a, 20b) zum Befestigen des Gehäuses (10) seitlich neben und beabstandet von einem gleichen Gehäuse (10') aufweist, so dass die angrenzenden Seitenwände (14) der beiden Gehäuse einen weiteren Plattenhüllen-Lagerbereich (26) zwischen den beiden Gehäusen begrenzen, und dass die Außenflächen (14b) der Seitenwände Haltemittel (18) zum Halten, bei Befestigung des Gehäuses an einem gleichen Gehäuse, einer weiteren Mehrzahl von Plattenhüllen aufweisen, die übereinander verteilt sind und sich jeweils über den weiteren Plattenhüllen-Lagerbereich (26) erstrecken.

2. Lagersystem nach Anspruch 1, bei dem die Haltemittel (18) an den Innen- (14a) und Außen- (14b) Flächen der Seitenwände (14) eine Mehrzahl vertikal verteilter Halteelemente aufweisen, die sich seitlich von der Oberfläche der Seitenwand erstrecken.

3. Lagersystem nach Anspruch 2, bei dem die Halteelemente (18) nach unten in Richtung auf die Rückseite des Gehäuses geneigt sind.

4. Lagersystem nach einem vorhergehenden Anspruch, bei dem das Mittel zum Befestigen des Gehäuses seitlich neben und beabstandet von einem gleichen Gehäuse wenigstens ein Überbrückungselement (20a, 20b) mit einem Mittel (22) an jedem entgegengesetzten Ende desselben für Eingriff mit einem jeweiligen Gehäuse aufweist.

5. Lagersystem nach Anspruch 4, bei dem jedes Eingriffsmittel Mittel (22) für Einführung in eine entsprechende Öffnung (24a, 24b) in dem jeweiligen Gehäuse aufweist.

6. Lagersystem nach einem vorhergehenden Anspruch, bei dem das Gehäuse eine Rückwand (12) aufweist, die die Seitenwände (14) so verbindet, um in Draufsicht eine annähernde U-Form zu bilden.

## Revendications

1. Dispositif de stockage de boîtiers de disques pour supports de stockage de données en forme de disque, le dispositif comprenant un carter (10) possédant une paire de parois latérales opposées (14) s'étendant vers l'avant depuis l'arrière du carter et définissant entre elles une première zone de stockage de boîtiers de disques (16), les surfaces intérieures (14a) des parois latérales étant pourvues de moyens de support (18) destinés à soutenir une pluralité de boîtiers de disques espacés l'un au-dessus de l'autre et chacun s'étendant en travers de la première zone de stockage de boîtiers de disques (16) et étant soutenu au niveau de ses bords opposés, **caractérisé en ce que** le dispositif comprend en outre des moyens (20a, 20b) pour fixer le carter (10) dans le plan latéral à côté d'un carter identique (10') et espacé par rapport à ce dernier, de telle sorte que les parois latérales adjacentes (14) des deux carters définissent une autre zone de stockage de boîtiers de disques (26), entre les deux carters, et **en ce que** les surfaces extérieures (14b) des parois latérales possèdent des moyens de support (18) afin de soutenir, lorsque le carter est fixé à un carter similaire, une pluralité supplémentaire de boîtiers de disques espacés l'un au-dessus de l'autre et chacun s'étendant en travers de la zone supplémentaire de stockage de boîtiers de disques (26).

2. Dispositif de stockage, selon la revendication 1, dans lequel les moyens de support (18) prévus sur les surfaces intérieures (14a) et extérieures (14b) des parois latérales (14) comprennent une pluralité d'éléments de support espacés dans le plan vertical s'étendant latéralement depuis la surface de la paroi latérale.

3. Dispositif de stockage, selon la revendication 2, dans lequel les éléments de support (18) sont inclinés vers le bas, en direction de l'arrière du carter.

4. Dispositif de stockage, selon l'une quelconque des revendications précédentes, dans lequel les moyens destinés à fixer le carter dans le plan latéral à côté d'un carter identique et espacé par rapport à ce dernier, comprennent au moins un élément de pontage (20a, 20b) pourvu d'un moyen (22) à chaque extrémité opposée de celui-ci pour s'engager avec un carter respectif.

5. Dispositif de stockage, selon la revendication 4, dans lequel chaque moyen d'engagement comprend un moyen (22) destiné à être inséré dans une ouverture correspondante (24a, 24b) dans le carter respectif.

6. Dispositif de stockage, selon l'une quelconque des revendications précédentes, dans lequel le carter possède une paroi arrière (12) qui raccorde les parois latérales (14) de manière à constituer, dans une vue en plan, une forme approximative en U.
